# EUROPÄISCHE PATENTSCHRIFT

(11) **EP 0 885 083 B1**
(45) Veröffentlichungstag und Bekanntmachung des Hinweises auf die Patenterteilung: **27.12.2000**
(21) Anmeldenummer: 97902532.7
(22) Anmeldetag: 25.02.1997
(51) Int. Cl.: B23D 57/00, B28D 5/04

(54) **VERFAHREN ZUM ZERTEILEN VON BLÖCKEN AUS HARTEN WERKSTOFFEN IN PLATTEN MITTELS EINER DRAHTSÄGE UND DRAHTSÄGE ZUR DURCHFÜHRUNG DIESES VERFAHRENS**
METHOD OF CUTTING BLOCKS OF HARD SUBSTANCES INTO PLATES BY MEANS OF A WIRE SAW, AND WIRE SAW FOR CARRYING OUT THIS METHOD
PROCEDE POUR DECOUPER DES BLOCS DE MATERIAUX DURS DANS DES PLAQUES AU MOYEN D'UNE SCIE HELICO DALE, ET SCIE HELICO DALE POUR METTRE EN OEUVRE CE PROCEDE

(30) Priorität: 06.03.1996 CZ 66996
(43) Veröffentlichungstag der Anmeldung: 23.12.1998
(73) Patentinhaber: Trimex Tesla, S.R.O., 756 61 Roznov pod Radhostem (CZ)
(72) Erfinder: VOJTECHOVSKY, Karel, 756 51 Roznov pod Radhosstem (CZ)
(74) Vertreter: Jeck, Anton, Dipl.-Ing.
(86) Internationale Anmeldenummer: IB9700155
(87) Internationale Veröffentlichungsnummer: WO9732681

(56) Entgegenhaltungen:
- DE-C- 548 791
- US-A- 3 525 324
- US-A- 3 540 427
- US-A- 3 599 623
- US-A- 5 269 285

## Beschreibung

### Bereich der Technik

Die Erfindung betrifft ein Verfahren zum Zerteilen von Blöcken aus harten Werkstoffen in Platten, insbesondere von Blöcken aus Halbleitern, Glas und Keramik, gemäß Oberbegriff von Patentanspruch 1, sowie eine Säge zur Durchführung dieses Verfahrens gemäß Oberbegriff von Patentanspruch 2.

### Bisheriger Stand der Technik

Zum Zerteilen von Blöcken aus harten Werkstoffen, z.B. von Halbleiter-, Keramik- und Glasblöcken, wird meistens ein Verfahren angewendet, welches das Einwirken eines lose beigegebenen Schleifmittels und eines beweglichen festen Trägers, meistens eines endlosen Drahtes, auf den zu zerteilenden Werkstoff nutzt. Dieses Verfahren zeichnet sich dadurch aus, daß das in einer Flüssigkeit, beispielsweise in Öl, verteilte Schleifmittel mit Hilfe eines Drahtes über ein System von genuteten Walzen an die Schnittstelle befördert wird, wobei der geschnittene Werkstoff allmählich durch eine Kette von umlaufenden Drähten gepreßt wird. Die Dicke der geschnittenen Platten ist durch den Abstand der Nuten in den Walzen, die Drahtdicke oder die Schleifmittelkörnigkeit gegeben, und die Schnittqualität wird durch den Schleifmittelwerkstoff und den Blockwerkstoff sowie durch weitere technologische Kenngrößen bestimmt.

Bekannt ist eine Reihe von Verfahren und Einrichtungen, z.B. gemäß der Patentschriften US 4 494 523, US 4 574 769, US 4 640 259, US 4 903 682, US 5 201 305, der den nächst kommenden Stand der Technik beschreibenden US 5 269 285 oder GB 2 216 441, die Einrichtungen beschreiben und deren verschiedene, das gegebene Prinzip nutzende Ausführungen schützen. Ein gemeinsames Merkmal der herkömmlichen Lösungen ist, daß der Draht in einem System genuteter Walzen so geführt wird, daß er sich während des Schneidevorgangs in allen Schnitten des Blocks zum gegebenen Zeitpunkt in einer Richtung bewegt. Das bewirkt, daß die hergestellten Platten entlang des Schnittes keine gleichbleibende Dicke aufweisen, d.h., daß sie in Richtung der Drahtbewegung eine Abschrägung infolge der abnehmenden Wirkung und Menge des am Draht während dessen Durchlauf durch den Blockschnitt haftenden Schleifstoffes aufweisen. Die Größe der Abschrägung kann durch die Bewegung des Drahtes in beiden Richtungen zum Teil korrigiert werden, indem der sich bewegende Draht nach einer bestimmten Schneidezeit mit Hilfe einer Umkehrschaltung der Bewegung in sämtlichen Blockschnitten in entgegengesetzter Richtung geführt wird. Ein Nachteil dieses Verfahrens besteht jedoch darin, daß der Schneidevorgang merklich verlangsamt wird und das Schneiden nicht kontinuierlich verläuft, da es mit großen Energieverlusten beim Anhalten und Anlassen der Drahtbewegung verbunden ist, wobei die Wahrscheinlichkeit einer Störung der zyklisch umgeschalteten und beanspruchten Einrichtungsknotenpunkte steigt.

### Wesen der Erfindung

Die aufgezählten Nachteile beseitigt das im Anspruch 1 definierte Verfahren. Dessen Wesen besteht darin, daß der endlose feste Träger, welcher in den Umfangsnuten der Walzen eines mindestens aus einem Paar Lenkwalzen und einem Paar Leitwalzen bestehenden Walzensystems läuft, in den zu schneidenden Werkstoff so hineingepreßt wird, daß er in jeweils zwei benachbarte Schnitte des Blocks in entgegengesetzten Richtungen gelenkt wird. Dabei wird der endlose feste Träger in der Kette des Walzensystems wiederholt in Umfangsnuten von der oberen Seite der ersten Lenkwalze über die obere Seite der entgegengelegenen Leitwalze auf die untere Seite der anliegenden zweiten Lenkwalze geführt, nach deren Passieren er über die obere Seite der entgegengerichteten Leitwalze wieder zur unteren Seite der ersten Lenkwalze und dann zurück zu deren oberen Seite geleitet wird.

Die Säge zum Zerteilen von Blöcken gemäß dieses Verfahrens besteht aus einem Walzensystem mit an ihrem Umfang mit Nuten versehenen Walzen, das an einem Rahmen befestigt ist und aus einem Tisch, einer Drahtanordnung und einer Einrichtung für den Transport und die Wärmestabilisierung des Schleifmittels. Sie ist dadurch gekennzeichnet, daß das Walzensystem aus mindestens einem Paar Leitwalzen und einem Paar Lenkwalzen gebildet ist, wobei die Lenkwalzen in Bezug auf die Leitwalzen so gelagert sind, daß der Drehsinn der nebeneinander gelagerten Lenkwalze und Leitwalze entgegengesetzt ist, wobei ein entgegengesetzter Drehsinn auch zwischen den beiden Leitwalzen und den beiden Lenkwalzen besteht.

Bei einer vorteilhaften Ausführung sind die Lenkwalzen und die Leitwalzen so positioniert, daß die obere Mantellinie der Lenkwalzen höher angeordnet ist als die obere Mantellinie der Leitwalzen und die Lage der Leitwalzen in einem festen Rahmen axial einstellbar ist. Der feste Träger ist in den Umfangsnuten der Walzenanordnung mehrmals so aufgewickelt, daß er eine Kette bildet, in der er in den Arbeitsraum zwischen dem Paar der Leitwalzen in jeweils zwei benachbarten Umfangsnuten entgegengerichtet von oben schräg nach unten oder von unten schräg nach oben geführt wird.

Bei dem vorgeschlagenen Zerteilungsverfahrens wird eine höhere Wirkung dadurch erzielt, daß unter Beibehaltung der erforderlichen Geschwindigkeit und des kontinuierlichen Zerteilungsprozesses, d.h. ohne energieaufwendiges Reversumschalten der Bewegungsrichtung des festen Trägers, eine ebene Wandgleichläufigkeit der geschnittenen Platten ohne die bisherigen Abschrägungen erreicht wird.

### Beschreibung der Abbildungen auf den Zeichnungen

Das Schneideverfahren und die Konstruktion der Drahtsäge, welche die Erfindung erläutern, sind anhand der beigefügten Zeichnung veranschaulicht. Es zeigen:
- Fig. 1: eine Anordnung eines Vierwalzensystems zweier Lenkwalzen und zweier kleinerer Leitwalzen mit Parallelachsen in einer Ebene,
- Fig. 2: das gleiche Walzensystem wie in Fig. 1, jedoch mit einer solchen Anordnung, bei der die Achsen beider Walzenpaare in verschiedenen Ebenen liegen,
- Fig. 3: eine alternative Anordnung des Systems mit Lenkwalzen kleineren Durchmessers und Leitwalzen größeren Durchmessers,
- Fig. 4: eine Ausführung des Vierwalzensystems mit in einer Ebene gelagerten Walzen gleichen Durchmessers,
- Fig. 5: ein alternatives Walzensystem, in dem zwischen den Lenk- und den Leitwalzen weitere eingelegte Walzen angebracht sind, und

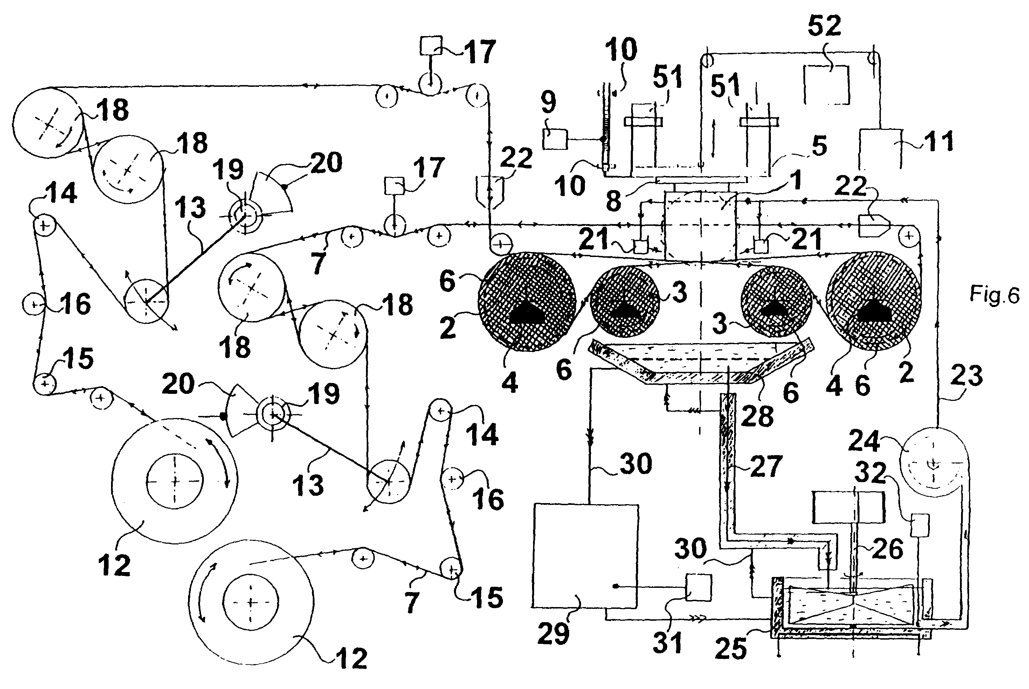

- Fig. 6: das Gesamtschema der grundlegenden Funktionselemente der Drahtsäge.

### Ausführungsbeispiele der Erfindung

Die Säge zum Zerteilen von Blöcken 1 aus harten Werkstoffen in Platten besteht aus vier grundlegenden Konstruktions- und Technologiehauptbereichen, und zwar dem Walzensystem, dem Tisch mit Zubehör, dem Drahtvorratsbehälter und der Einrichtung für den Transport und die Temperaturstabilisierung des Schleifmittels. Die Walzeneinheit bildet den Kern der Säge und besteht aus mindestens einem Paar Lenkwalzen 2 sowie einem Paar Leitwalzen 3, die an einem festen Rahmen 4 befestigt sind. Dieser ist mit dem Träger des Tisches 5 fest verbunden und sichert die erforderliche mechanische Stabilität und Steifheit des Walzensystems. Die Lage der Leitwalzen 3 ist in dem festen Rahmen 4 axial einstellbar, wobei die Lenkwalzen 2 in Bezug auf die Leitwalzen 3 so gelagert sind, daß deren obere Mantellinie höher liegt als die obere Mantellinie dieser Leitwalzen 3. Die Oberflächen der Walzen 2 und 3 sind fein geschliffen und mit einem System von Umfangnuten 6 für die Führung des endlosen, umlaufenden, festen Trägers 7 versehen, vorzugweise mit einem Draht, der eine Kette für das Durchdschieben des Blocks 1 beim Zerschneiden bildet. Eine der Walzen 2, 3 des Walzensystems ist als antreibende Walze ausgebildet und mit einem nicht gezeigten Antriebsmotor mit stufenloser Drehzahlregekng gekoppelt, der eine Einstellung der Bewegungsgeschwindigkeit des endlosen Trägers 7 in einem Wertbereich von 0 bis 15 m.s⁻¹ in beiden Richtungen ermöglicht.

Der Tisch 5 der Säge ist geteilt und dient zur Orientierungsbefestigung des zu zerteilenden Blocks 1, z.B. aus Halbleiterkristallen, und zu dessen zusätzlicher Orientierung in Bezug auf die Schnittebene. Für das gesteuerte Einschieben und Einpressen des Blocks 1 in die Kette des endlosen, umlaufenden, auf dem Walzensystem aufgewickelten, festen Trägers 7 ist der Tisch 5 mit Schiebestäben 51 und einem Antrieb 52, z.B. einem computergesteuerten Motor, versehen, wobei die Vorschubgeschwindigkeit des Tisches 5 im Bereich von 0 bis 1000 µm.s⁻¹ einstellbar ist, und zwar nach oben und nach unten, in beiden Richtungen. Der zu zerschneidende Block 1 wird am Tisch 5 über ein System von Glas- oder Graphitunterlagen 8 mechanisch befestigt, und die Schnittgröße des Blocks 1 oder die Information über dessen restliche Dicke wird mit Hilfe eines inkrementalen linearen Fühlers 9 überwacht. Dabei werden die Endstellungen des sich bewegenden Tisches 5 mit Endschaltern 10 gesichert, und zur Verminderung der extremen Beanspruchung der einzelnen Konstruktionshauptbereiche während des Bewegens ist der Tisch 5 mit einem Gegengewicht 11 vesehen, welches die Masse der Mechanik des Tisches 5 und die des zu zerschneidenden Blocks 1 kompensiert.

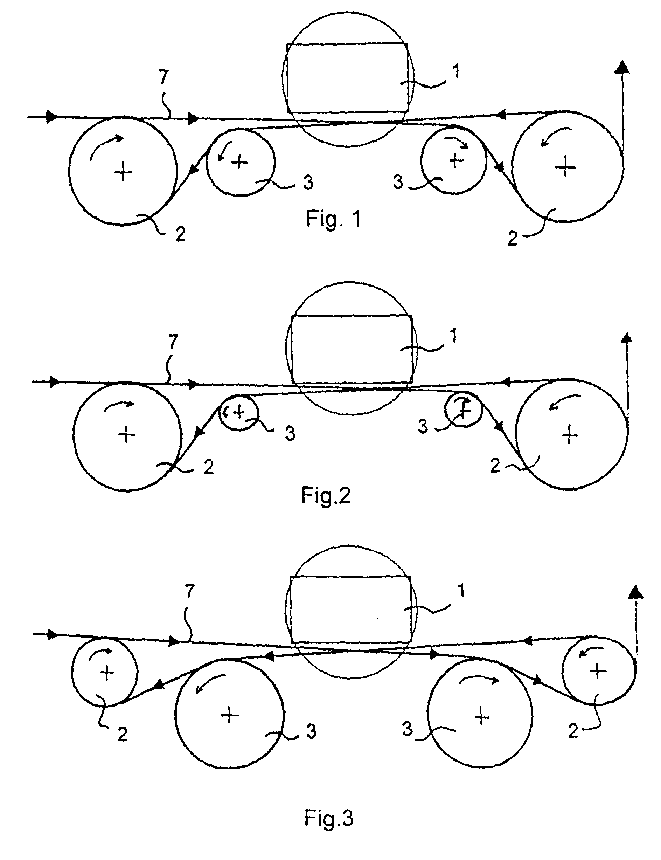

Das eigentliche sichere Abwickeln oder Aufwickeln des endlosen festen Trägers 7 von den Spulen 12 mit einer vorgegebenen Geschwindigkeit und mit einer im voraus festgesetzten, überwachten Spannung sichert ein System der Drahtführung, wobei der Aufwicklungs- und der Abwicklungsweg voneinander getrennt, jedoch streng synchronisiert sind. Die Ungleichmäßigkeiten der Aufwicklung werden mit Hilfe von Spannern 13 kompensiert, und der eigentliche Transport des festen Trägers 7 ist über ein System von Rollen 14, Spannwalzen 15 und Haltesprossen 16 verwirklicht, wobei die eigentliche Spannung des festen Trägers 7 mit Hilfe von Drucksensoren 17 gemessen wird und die Spannungsregelung mit Hilfe einer Unterschiedsspannung zwischen den nicht gezeigten, die Capstane 18 und die antreibende Walze 2, 3 des Walzensystems antreibenden Motoren vorgenommen wird. Die Aufwickelkraft bei dem Verlegen des festen Trägers 7 ist durch die Kraft der Feder 19 auf den Spannern 13 gegeben, und die eventuell auftretenden Störungen werden von den Signalgebern 20 der Randstellungen der Spanner 13 überwacht, welche an das nicht gezeigte Steuersystem der Drahtsäge angeschlossen sind. In einer üblichen Art wird mit Hilfe des nicht veranschaulichten, mit einem der Capstane 18 verbundenen, inkrementalen Rotationsfühlers ebenfalls die Geschwindigkeit und die Länge des abgewickelten festen Trägers 7 überwacht. Im Walzensystem ist der feste Träger 7 in den Umfangsnuten 6 der Paare der Lenkwalzen 2 und der Leitwalzen 3 so aufgewickelt, daß er in das System von der Oberseite der ersten Lenkwalze 2 eintritt und über die Oberseite der gegenüberliegenden Leitwalze 3 zur Unterseite der benachbarten zweiten Lenkwalze 2 geführt wird, die der Träger 7 umschließt. Anschließend wird der feste Träger 7 von der Oberseite dieser Lenkwalze 2 über die Oberseite der gegenüberliegenden Leitwalze 3 zurück zur Eintritts-Lenkwalze 2 geführt, die er umschließt. Aufgrund der obigen mehrfachen Aufwicklung des festen Trägers 7 in den Umfangsnuten 6 wird eine Kette gebildet, in welcher der feste Träger 7 zwischen den Leitwalzen 3 in jeweils zwei benachbarte Schnitte des zu zerteilenden Blocks 1 in entgegengesetzten Richtungen geleitet wird, wie aus Fig. 1 bis 5 hervorgeht.

Die zum Schneiden verwendete Schleifmittellösung wird auf den endlosen festen Träger 7 mit Hilfe von Verteilern 21 befördert, die auf die Eintrittsstelle des festen Trägers 7 in den Schnitt des Blocks 1 gerichtet sind. Am Austritt des festen Trägers 7 aus dem Walzensystem sind Hochleistungs-Luftfilter 22 angebracht, welche von dem festen Träger 7 die anhaftenden Reste des Schleifmittels entfernen. Die Verteiler 21 sind mit Hilfe eines Systems von Zuleitungsrohren 23 über eine Pumpe 24 an den mit einem Rührwerk 26 versehenen Behälter 25 angeschlossen. Der Behälter 25 ist seinerseits über eine Ableitung 27 mit dem unter dem Walzensystem angeordneten Sammelbehälter 28 verbunden, in dem die ablaufende Schleifmittellösung gesammelt wird. Die Temperatur der Schleifmittelösung wird mit Hilfe eines Kühlkreislaufes, bestehend aus einem Kühlaggregat 29 mit einer Kühlrohrleitung 30, die in Doppelmänteln des Behälters 25, der Ableitung 27 und des Sammelbehälters 28 geleitet wird, in dem vorgegebenen Bereich gehalten. Die eigentliche Temperatur der Kühlflüssigkeit wird von einem Temperaturfühler 31 überwacht. Die Informationen über Strömungen und Viskosität des Schleifmittels werden von einem im Behälter 25 untergebrachten Sensorgeber 32 überwacht; sämtliche Werte werden an das nicht gezeigte Steuersystem der Maschine weitergereicht und dort ausgewertet.

Vor Beginn des Arbeitsprozesses der Drahtsäge werden entlang der gesamten Strecke der feste Träger 7 aufgewickelt, die Kennzahlen der einzelnen Funktionshauptbereiche der Maschine eingestellt, der Block 1 mit Hilfe der Unterlagen 8 auf den Tisch 5 gespannt und dessen Lage in Bezug auf die Schnittebene eingestellt und fixiert. Nach Ingangsetzen des festen Trägers 7 in der gewählten Bewegungsrichtung wird der Block 1 durch die aus dem Walzensystem der Leitwalzen 3 und der Lenkwalzen 2 gebildete Kette mit der gewählten Vorschubgeschwindigkeit durchgepreßt, wobei am Eintritt des festen Trägers 7 in die Schnitte das Schleifmittel mit Hilfe der Verteiler 21 beigegeben wird. Nach dem Zerschneiden des festen Blocks 1 in einzelne Segmente wird der Tisch 5 wieder in die Ausgangslage versetzt und der gesamte Vorgang kann wiederholt werden, wobei die Bewegungsrichtung des festen Trägers 7 und die sonstigen Schnittkenngrößen, wie z.B. die Vorschubgeschwindigkeit des Tisches 5 in den Schnitt, die Bewegungsgeschwindigkeit und die Spannung des festen Trägers 7, die Menge, Temperatur und Viskosität des Schleifmittels usw. neu gewählt werden können.

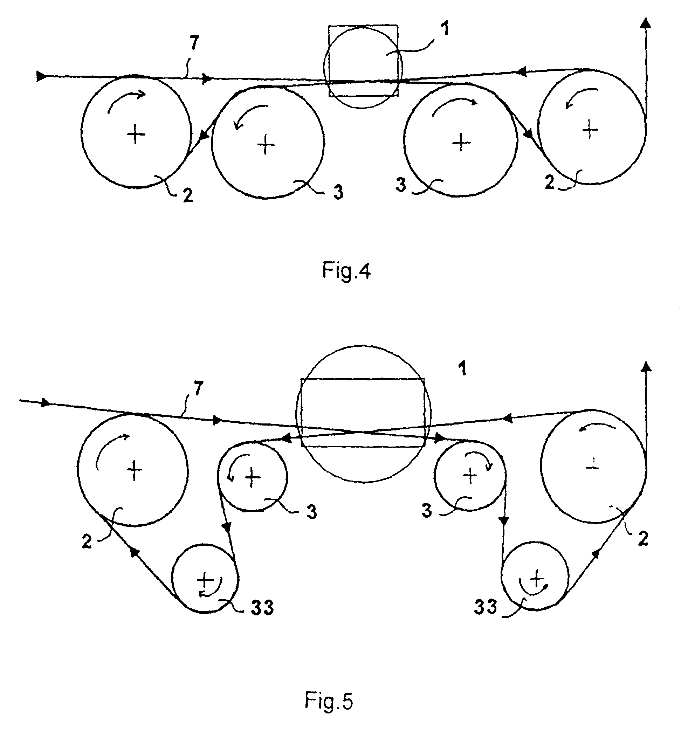

Die aufgezeichnete Konstruktion der Säge ist nicht die einzige mögliche Lösung gemäß der Erfindung. Unter Beibehaltung der Grundanordnung der Paare Leitwalzen 3 und Lenkwalzen 2 des Walzensystems, der Art der Aufwicklung und der Bewegung des festen Trägers 7 zwischen ihnen und in den einzelnen Schnitten des festen Blocks 1 können die Anordnung und die Konstruktion der Drahtwirtschaft, des Tisches 5 und dessen Zubehör sowie die einzelnen Elemente der Einrichtung für den Transport und die Kühlung des Schleifmittels ohne Einfluß auf das Wesen der Lösung beliebig geändert werden. Wie aus Abb. 1 bis 4 ersichtlich ist, kann auch das gegenseitige Größenverhältnis und die gegenseitige Anordnung der Leitwalzen 3 sowie der Lenkwalzen 2 gewählt werden, und zwar unter Beibehaltung der Bedingung, daß der Eintritt des festen Trägers 7 in den Schnitt des Blocks 1 höher liegen muß als dessen Austritt. So ist z.B. gemäß Abb. 5 zwischen den Leitwalzen 3 und den Lenkwalzen 2 ein Paar Zwischenwalzen 33 eingefügt.

### Gewerbliche Anwendbarkeit

Das Verfahren zum Zerschneiden von Blöcken aus hartem Werkstoff in Platten und die Säge zur Durchführung des Verfahrens können in verschiedenen Industriezweigen genutzt werden, wo harte Werkstoffe, wie z.B. Halbleiter, Keramik oder Glas, in genaue Segmente mit gleichlaufenden, gegenüberliegenden ebenen Flächen zerteilt werden müssen.

## Patentansprüche

1. Verfahren zum Zerteilen von Blöcken (1) aus harten Werkstoffen in Platten durch Einwirken eines lose beigegebenen Schleifmittels und eines endlosen, umlaufenden, festen Trägers (7), der infolge der Führung in Umfangsnuten (6) achsparalleler Walzen (2, 3) eines Walzensystems eine Kette bildet, durch die der zu zerschneidende Werkstoff durchgepresst wird,
dadurch gekennzeichnet,
dass der Träger (7), der in den Umfangsnuten (6) der Walzen (2, 3) eines aus mindestens einem Paar Lenkwalzen (2) und mindestens einem Paar Leitwalzen (3) bestehenden Walzensystems läuft, in den zu schneidenden Werkstoff so hineingepresst wird, dass er in jeweils zwei benachbarte Schnitte des Blocks (1) in entgegengesetzten Richtungen gelenkt wird, und
dass der Träger (7) in der Kette des Walzensystems wiederholt in Umfangsnuten von der Oberseite der ersten Lenkwalze (2) über die Oberseite der gegenüberliegenden Leitwalze (3) auf die Unterseite der benachbarten zweiten Lenkwalze (2), nach deren Passieren über die Oberseite der gegenüberliegenden Leitwalze (3) wieder zur Unterseite der ersten Lenkwalze (2) und dann zurück zu deren Oberseite geleitet wird.

2. Säge zum Zerteilen von Blöcken nach einem Verfahren gemäß Anspruche 1 mit einem Walzensystem mit an ihrem Umfang mit Nuten (6) versehenen Walzen (2,3), das an einem Rahmen befestigt ist und aus einem Tisch (5), einer Drahtanordnung und einer Einrichtung für den Transport und Wärmestabilisierung des Schleifmittels besteht,
dadurch gekennzeichnet,
daß das Walzensystem aus einem Paar Leitwalzen (3) und einem Paar Lenkwalzen (2) gebildet ist, wobei die Lenkwalzen (2) in Bezug auf die Leitwalzen (3) so gelagert sind, daß der Drehsinn der nebeneinander gelagerten Lenkwalze (2) und Leitwalze (3) entgegengesetzt ist, wobei ein entgegengesetzter Drehsinn auch zwischen den beiden Leitwalzen (3) und den beiden Lenkwalzen (2) besteht.

3. Säge nach Anspruch 2,
dadurch gekennzeichnet,
daß die Lenkwalzen (2) und die Leitwalzen (3) so positioniert sind, daß die obere Mantellinie der Lenkwalzen (2) höher angeordnet ist als die obere Mantellinie der Leitwalzen (3).

4. Säge nach Anspruch 2 oder 3,
dadurch gekennzeichnet,
daß die Position der Leitwalzen (3) im Rahmen (4) axial verstellbar ist.

5. Säge nach einem der Ansprüche 2 bis 4,
dadurch gekennzeichnet,
daß der feste Träger (7) auf den Lenkwalzen (2) und den Leitwalzen (3) des Walzensystems mehrmals so aufgewickelt ist, daß er eine Kette bildet, in der er in den Arbeitsraum zwischen dem Paar der Leitwalzen (3) in jeweils zwei benachbarten Umfangsnuten (6) entgegengerichtet von oben schräg nach unten oder von unten schräg nach oben geführt wird.

## Claims

1. Method of splitting blocks (1), formed from hard materials, into plates by applying a loosely added abrasive and an endless, circumferential, fixed carrier (7), which forms a chain as a result of being guided in circumferential grooves (6) of axis-parallel rollers (2, 3) of a roller system, the material which is to be split being pressed through said chain, characterised in that the carrier (7), which travels in the circumferential grooves (6) of the rollers (2, 3) of a roller system, which comprises at least one pair of deflecting rollers (2) and at least one pair of guide rollers (3), is pressed into the material to be cut so that it is deflected into two respectively adjacent cuts of the block (1) in opposite directions, and in that the carrier (7) in the chain of the roller system is repeatedly guided in circumferential grooves from the upper side of the first deflecting roller (2) via the upper side of the oppositely situated guide roller (3) onto the underside of the adjacent second deflecting roller (2), and after passing over the upper side of the oppositely situated guide roller (3), said carrier is again guided to the underside of the first deflecting roller (2) and then back to the upper side thereof.

2. Saw for splitting blocks according to a method according to claim 1, having a roller system with rollers (2,3), which are provided with grooves (6) on their circumference, which system is mounted on a frame and comprises a table (5), a wire arrangement and a means for conveying and thermally stabilising the abrasive, characterised in that the roller system is formed from a pair of guide rollers (3) and a pair of deflecting rollers (2), the deflecting rollers (2) being so mounted relative to the guide rollers (3) that the adjacently mounted deflecting roller (2) and guide roller (3) rotate in opposite directions, the two guide rollers (3) and the two deflecting rollers (2) also rotating in opposite directions.

3. Saw according to claim 2, characterised in that the deflecting rollers (2) and the guide rollers (3) are so positioned that the upper generatrix of the deflecting rollers (2) is disposed higher than the upper generatrix of the guide rollers (3).

4. Saw according to claim 2 or 3, characterised in that the position of the deflecting rollers (3) in the frame (4) is axially adjustable.

5. Saw according to one of claims 2 to 4, characterised in that the fixed carrier (7) is wound several times over the deflecting rollers (2) and the guide rollers (3) of the roller system in such a manner that it forms a chain, in which said carrier is guided in opposite directions, from top to bottom inclinedly or from bottom to top inclinedly, into the working area between the pair of guide rollers (3) in two respectively adjacent circumferential grooves (6).

## Revendications

1. Procédé pour découper en plaques des blocs (1) en matériau dur sous l'action d'un produit abrasif librement additionné et d'un support solide (7) sans fin et en mouvement, support qui par suite de son guidage dans des rainures périphériques (6) de cylindres (2, 3) à axes parallèles d'un système de cylindres constitue une chaîne, au travers de laquelle le bloc à découper est chassé sous pression,
caractérisé
en ce que le support (7) qui circule dans les rainures périphériques (6) des cylindres (2, 3) d'un système de cylindres comprenant au moins une paire de cylindres de direction (2) et au moins une paire de cylindres de guidage (3), système dans lequel le matériau à découper en plaques est chassé sous pression de manière telle qu'il est chaque fois dirigé en sens opposés pour deux découpes contiguës du bloc, et
en ce que dans la chaîne du système de cylindres, le support (7) est à plusieurs reprises guidé depuis la face supérieure du premier cylindre de direction (2) par-delà la face supérieure du cylindre de guidage (3) opposé vers la face inférieure du deuxième cylindre de direction (2) voisin après son passage sur la face supérieure du cylindre de guidage (3) opposé et de nouveau vers la face inférieure du premier cylindre de direction (2) pour revenir ensuite à la face supérieure de ce dernier cylindre.

2. Scie pour découper des blocs conformément au procédé suivant la revendication 1 avec un système de cylindres comportant des cylindres (2, 3) à rainures (6) périphériques, système de cylindres qui est fixé à un bâti comprenant une table (5), un dispositif à fil métallique et un dispositif pour le transport et la stabilisation de la température du produit abrasif,
caractérisée
en ce que le système de cylindres comprend une paire de cylindres de guidage (3) et une paire de cylindres de direction (2), où les cylindres de direction (2) sont par rapport aux cylindres de guidage (3) montés de manière telle que les sens de rotation du cylindre de direction (2) et du cylindre de guidage (3) contigus sont opposés, les sens de rotation des deux cylindres de guidage (3) et des deux cylindres de direction (2) étant eux aussi opposés.

3. Scie suivant la revendication 2,
caractérisée
en ce que les cylindres de direction (2) et les cylindres de guidage (3) sont positionnés de manière telle que la génératrice supérieure des cylindres de direction (2) est située à un niveau plus haut que la génératrice supérieure des cylindres de guidage (3).

4. Scie suivant la revendication 2 ou la revendication 3,
caractérisée
en ce que la position des cylindres (3) au sein du bâti (4) est réglable axialement.

5. Scie suivant l'une quelconque des revendications de 2 à 4,
caractérisée
en ce que le support fixe (7) est enroulé à plusieurs reprises sur les cylindres de direction (2) et sur les cylindres de guidage (3) du système de cylindres de manière telle qu'il constitue une chaîne, au sein de laquelle il est, dans l'enceinte de travail entre la paire de cylindres de guidage (3), guidé chaque fois dans deux rainures périphériques contiguës (6) dans des sens opposés en oblique de haut en bas ou en oblique de bas en haut.
